# EUROPÄISCHE PATENTSCHRIFT

(11) **EP 2 572 166 B1**
(45) Veröffentlichungstag und Bekanntmachung des Hinweises auf die Patenterteilung: **02.08.2017**
(21) Anmeldenummer: 11722731.4
(22) Anmeldetag: 13.05.2011
(51) Int. Cl.: G01D 5/14

(54) **MAGNETFELDSENSOR FÜR EINEN POSITIONSGEBER**
MAGNETIC FIELD SENSOR FOR A POSITION DETECTOR
CAPTEUR DE CHAMP MAGNÉTIQUE POUR UN DÉTECTEUR DE POSITION

(30) Priorität: 05.11.2010 DE 102010050356; 11.06.2010 DE 102010023489; 20.05.2010 DE 102010022155
(43) Veröffentlichungstag der Anmeldung: 27.03.2013
(73) Patentinhaber: Avago Technologies General IP (Singapore) Pte. Ltd., Singapore 768923 (SG)
(72) Erfinder: Mehnert, Walter, 85521 Ottobrunn (DE); Theil, Thomas, 8234 Feldafing (DE)
(74) Vertreter: Dilg, Haeusler, Schindelmann Patentanwaltsgesellschaft mbH
(86) Internationale Anmeldenummer: PCT/EP2011/002394
(87) Internationale Veröffentlichungsnummer: WO 2011/144313

(56) Entgegenhaltungen:
- EP-A2- 0 772 046
- EP-A2- 1 182 461
- WO-A1-2007/020579
- US-A- 4 587 509
- US-A- 5 627 465
- US-A- 5 811 968
- US-A1- 2001 048 302

## Beschreibung

Die Erfindung betrifft einen Magnetfeldsensor der Art, wie er beispielsweise aus der EP 1 182 461 A2 bekannt ist.
Derartige Magnetfeldsensoren können in all den Fällen eingesetzt werden, in denen die Richtung eines Magnetfeldes detektiert werden soll, insbesondere als Feinauflösungseinheiten bei Linear- oder Drehgebern, deren die zu überwachende Bewegung abbildende Erregereinheit eine Permanentmagnet-Anordnung umfasst, in deren Magnetfeld das wenigstens eine magnetosensitive Element des Magnetfeldsensors feststehend positioniert ist. Dabei treten Fälle auf, in denen die aktive Fläche des magnetosensitiven Elements nicht so angeordnet werden kann, dass sie die bezüglich des zu erfassenden Magnetfeldes erforderliche Orientierung aufweist. Beispielsweise muss die aktive Fläche eines Hallelementes so ausgerichtet sein, dass sie von den Magnetfeldlinien zumindest mit einer zu ihr senkrechten Komponente durchsetzt wird. Je kleiner diese Komponente ist, desto geringer wird bei gegebener Feldstärke das von der Hallsonde abgegebene Signal, das dann, wenn die Feldlinien parallel zur aktiven Fläche verlaufen völlig verschwindet. Hallelemente besitzen streng genommen ein aktives Volumen, das von den Magnetfeldlinien in der eben beschriebenen Weise durchsetzt werden muss. Insbesondere dann, wenn die Hallelemente plättchenförmig in einem Halbleiterchip ausgebildet sind, hat dieses aktive Volumen senkrecht zu den Hauptflächen des Plättchens nur eine äußerst geringe Erstreckung (Dicke), sodass mit guter Näherung von "der aktiven Fläche" eines magnetosensitiven Elementes gesprochen werden kann.
Um eine parallele Ausrichtung der aktiven Fläche eines magnetosensitiven Elementes zur Richtung eines Magnetfeldes dennoch zu ermöglichen, ist es aus der EP 1 182 461 A2 bekannt, einen Magnetfeldumlenkeinrichtung vorzusehen, die aus einem einzigen plättchenförmigen Umlenkkörper aus ferromagnetischem Material besteht, der bezüglich des Hallelementes so angeordnet ist, dass sich seine Hauptflächen in etwa parallel zu dessen aktiver Fläche erstrecken, über die hinweg sein Rand verläuft. Der Umlenkkörper verändert in seinem Umfeld den Verlauf der zunächst zur aktiven Fläche parallelen Feldlinien derart, dass sie eine zu dieser senkrechte Richtungskomponente erhalten.
Nachteilig an dieser bekannten Anordnung ist, dass der Verlauf der die aktive Fläche durchsetzenden Feldlinien in starkem Maße durch den Rand des Umlenkkörpers so beeinflusst wird, dass das tatsächlich zur Messung zur Verfügung stehende Feld über der aktiven Fläche stark schwankt und im Wesentlichen unter einem von 90° verschiedenen Winkel einfällt. Wird eine solche Umlenkanordnung für eine Hallsonde verwendet, die beispielsweise aus vier paarweise gegeneinander geschalteten, kreuzförmig angeordneten Hallelementen besteht, wird damit auch zwangsläufig der Durchmesser des Umlenkkörpers vorgegeben. Aufgrund von Umwelteinflüssen und der Forderung, möglichst ein- und denselben und homogenen Feldbereich zu erfassen, müssen die Hallelemente nahe beieinander liegen. Deswegen wird, weil die aktive Fläche eines jeden Hallelements vom Rand des plättchenförmigen Umlenkkörpers geschnitten werden soll, dessen Durchmesser zwangsläufig sehr klein. Dies erschwert die Positionierung und Symmetrierung der Hallelemente. Mit einem solchen kleinen Plättchen lässt sich keine zusätzliche Feldverstärkung erzielen; eine Feldverstärkung ergibt sich vielmehr direkt aus der Geometrie des Plättchens. Der Hauptnachteil dieses einzigen Plättchens ist darin zu sehen, dass es keine Gestaltungsmöglichkeiten im Hinblick auf die Anpassung an verschiedene Magnetfeldkonfigurationen und insbesondere die Eliminierung von störenden Fremdfeldern gibt.
WO 2007/020579 A1 betrifft eine portable elektronische Vorrichtung mit einer Dreheinheit und einer Magnetflussführungsanordnung zum Erhöhen des magnetischen Feldes durch einen Magnetfeldsensor.
US 4 587 509 A betrifft eine Halleffektvorrichtung mit überlappenden Flusskonzentratoren.
US 5 627 465 A betrifft einen Rotationspositionssensor mit mechanischer Einstellung von Offset und Verstärkungssignalen.

EP 0 772 046 A2 betrifft einen Magnetfeldsensor für einen Strom- und/oder Energiesensor, wobei der Magnetfeldsensor drei flache Flusskonzentratoren aufweist, die in zwei parallelen Ebenen so angeordnet sind, dass sie zwei Überlappungsbereiche bilden, in denen sich jeweils ein Hallelement befindet. Der Erfindung liegt die Aufgabe zugrunde, einen Magnetfeldsensor der eingangs genannten Art so weiterzubilden, dass die Homogenität und Stärke des die aktive Fläche des oder der magnetosensitiven Elemente durchsetzenden Magnetfeldes erheblich verbessert werden und eine günstigere Anpassung an verschiedene Konfigurationen der zu erfassenden Magnetfelder sowie der sie überlagernden Störfelder gegeben ist.
Zur Lösung dieser Aufgabe sieht die Erfindung die in den unabhängigen Ansprüchen 1 und 2 zusammengefassten Merkmale vor.
Diesen Maßnahmen liegt insbesondere die Erkenntnis zugrunde, dass die Nachteile des Standes der Technik darauf beruhen, dass eben nur ein einziger Umlenkkörper verwendet wird und das wenigstens eine magnetosensitive Element so anzuordnen ist, dass der Rand des Umlenkkörpers in der senkrechten Parallelprojektion auf seine aktive Fläche diese durchschneidet.
Demgegenüber werden gemäß der Erfindung vier oder fünf Umlenkkörper verwendet, deren Grundflächen z.B. auf den beiden zur aktiven Fläche parallelen Hauptflächen des wenigstens einen magnetosensitiven Elementes so positioniert sind, dass sich ihre senkrechten Parallelprojektionen in Richtung der aktiven Fläche überdecken, und diese vollständig innerhalb des so erzeugten Überlappungsbereiches liegt. Somit können Feldlinien, die ohne das Vorhandensein der Umlenkkörper parallel zu der aktiven Fläche des magnetosensitiven Elementes verlaufen würden, unbeeinflusst von Randeffekten von dem einen Umlenkkörper in den anderen übertreten und dabei die aktive Fläche in optimaler Weise, nämlich senkrecht mit maximaler Feldstärke durchsetzen.
Bei Magnetfeldsensoren mit mehr als einem magnetosensitiven Element (vier magnetosensitiven Elementen) besteht ein besonderer Vorteil der erfindungsgemäßen Verwendung und Anordnung von wenigstens zwei (vorliegend vier oder fünf) Umlenkkörpern darin, dass deren Größe nicht durch die Anordnungsgeometrie der aktiven Flächen der magnetosensitiven Elemente festgelegt ist, da diese nicht von Rändern der Umlenkkörper geschnitten werden müssen.
An die Positioniergenauigkeit der Umlenkkörper bezüglich des oder der magnetosensitiven Elemente sind keine besonderen Anforderungen zu stellen, weil sich diese nur im jeweiligen Überlappungsbereich befinden müssen.
Zur Erzielung einer kleinen Bauform sind die Umlenkkörper als flache Plättchen ausgebildet.

Sollen, wie dies z.B. bei Feinauflösungseinheiten von Drehgebern erforderlich ist, zwei gegeneinander phasenverschobene Signale erzeugt werden, so werden in bevorzugter Weise vier magnetosensitive Elemente vorgesehen, die kreuzförmig in gleichen Abständen von einem Mittelpunkt angeordnet sind und deren aktive Flächen in einer Ebene liegen. Die Magnetfeldumlenkeinrichtung umfasst dabei vier gleiche, die Form flacher Kreisringabschnittsscheiben aufweisende, ferromagnetische Umlenkkörper, die konzentrisch zu dem Mittelpunkt so angeordnet sind, dass jeweils zwei einander diametral gegenüberliegende Ringscheibenabschnitte oberhalb und zwei einander diametral gegenüberliegende Ringscheibenabschnitte unterhalb der Ebene der aktiven Flächen liegen, wobei sich die Ringscheibenabschnitte in den Bereichen ihrer radial verlaufenden Kanten überlappen. In jedem der vier so gebildeten Überlappungsbereiche ist eines der magnetosensitiven Elemente angeordnet. Wegen ihrer geometrischen Symmetrie liefert auch diese Anordnung bei einer 360°-Drehung des Magnetfeldes um den Mittelpunkt zwei um 90° phasenverschobene Ausgangssignale, deren jeweilige Verläufe in sehr guter Näherung sinusförmig sind. Dadurch, dass die Signalausgänge von jeweils zwei einander diametral gegenüberliegenden magnetosensitiven Elementen gegeneinander geschaltet sind, wird der Einfluss von magnetischen Störfeldern die senkrecht zu dem zu erfassenden Magnetfeld verlaufen, auf das Messsignal unterdrückt.

Vorteilhafte Varianten eines erfindungsgemäßen Magnetfeldsensors mit vier magnetosensitiven Elementen und fünf plättchenförmigen Umlenkkörpern zur Erzeugung von vier um jeweils 90° gegeneinander phasenverschobenen, praktisch exakt sinusförmigen Ausgangssignalen sind in den Ansprüchen niedergelegt. In wenigstens einem der Überlappungsbereiche kann ein weiteres magnetosensitives Element angeordnet sein, dessen Ausgangssignal bei einem die Umdrehungen des Magnetfeldes zählenden, absoluten Multiturn zur Drehrichtungserkennung verwendet werden kann.
Die Umlenkkörper bestehen vorzugsweise aus Ferrit oder ferromagnetischem Material und sind in besonders bevorzugter Weise Bestandteile eines ICs.

Die Erfindung wird in Folgenden anhand von Beispielen unter Bezugnahme auf die Zeichnung beschrieben; in dieser zeigen:
- Fig. 1: eine schematische Draufsicht auf einen beispielhaften Magnetfeldsensor mit zwei plättchenförmigen, außerhalb des Überlappungsbereichs unregelmäßig geformten Umlenkkörpern,
- Fig. 2: in stark vergrößertem Maßstab einen stark schematisierten Schnitt durch den Magnetfeldsensor aus Fig. 1 in Richtung der Magnetfeldlinien,
- Fig. 3: den Verlauf des bei einer 360°-Drehung des Magnetfeldes um die sich durch das magnetosensitive Element ersteckende Drehachse am magnetosensitiven Element aus den Fig. 1 und 2 abgreifbaren Signals,
- Fig.4: eine der Fig. 1 entsprechende schematische Draufsicht auf einen beispielhaften Magnetfeldsensor mit zwei plättchenförmigen, außerhalb des Überlappungsbereichs halbkreisförmigen Umlenkkörpern,
- Fig. 5: analog zur Fig. 3 den Verlauf des bei einer 360°-Drehung des Magnetfeldes um die sich durch das magnetosensitive Element ersteckende Drehachse am magnetosensitiven Element aus den Fig. 4 abgreifbaren Signals,
- Fig. 6: eine schematische Draufsicht auf einen erfindungsgemäßen Magnetfeldsensor mit vier plättchenförmigen, jeweils in etwa die Form eines Viertel-Kreisrings besitzenden Umlenkkörpern,
- Fig. 7: einen schematisierten Schnitt durch den Magnetfeldsensor aus Fig. 6 längs der Linie VII-VII,
- Fig. 8: den Verlauf der bei einer 360°-Drehung des Magnetfeldes um die zur Zeichenebene senkrechte, sich durch das Zentrum des von den Umlenkkörpern gebildeten virtuellen Kreisrings ersteckende Drehachse an den magnetosensitiven Elementen des Magnetfeldsensors aus den Fig. 6 und 7 abgreifbaren Signale,
- Fig. 9: eine perspektivische Ansicht des Magnetfeldsensors aus Fig. 6,
- Fig. 10: eine schematische Draufsicht auf einen beispielhaften Magnetfeldsensor mit vier plättchenförmigen Umlenkkörpern, von denen der eine die Form eines Kreises besitzt, während die drei anderen als rechteckige Streifen ausgebildet sind,
- Fig. 11: einen schematisierten Schnitt durch den Magnetfeldsensor aus Fig. 10 längs der Linie XI-XI,
- Fig. 12: eine schematische Draufsicht auf einen beispielhaften Magnetfeldsensor mit drei plättchenförmigen Umlenkkörpern, von denen der eine L-förmig ausgebildet ist, während die beiden anderen jeweils die Form eines rechteckigen Streifens aufweisen,
- Fig. 13: einen schematisierten Schnitt durch den Magnetfeldsensor aus Fig. 12 längs der Linie XIII-XIII,
- Fig. 14: eine Draufsicht auf die drei Umlenkkörper des Magnetfeldsensors aus Fig. 12 in einer Anordnung, in der sie aus ihrer Funktionsstellung heraus geschoben sind, die jedoch ihre Form deutlich erkennen lässt,
- Fig. 15: eine stark schematisierte perspektivische Ansicht der wesentlichsten Funktionsteile eines Hohlwellen-Drehgebers mit einem Magnetträger, der aus einem nicht magnetisierbaren Material mit eingebetteten Permanentmagneten besteht, und einem Magnetfeldsensor,
- Fig. 16: eine schematische Draufsicht auf den Magnetfeldsensor aus Fig. 15 und
- Fig. 17: einen schematisierten Schnitt durch den Magnetfeldsensor aus Fig. 16 längs der Linie XVII-XVII.

In den Figuren sind gleiche oder einander unmittelbar entsprechende Teile mit den gleichen Bezugszeichen versehen. Wenn in der folgenden Beschreibung räumliche Angaben wie "oben" und "lunten" oder "links" und "rechts" verwendet werden, so beziehen sie sich nur auf die jeweiligen Figuren, da die räumliche Lage eines erfindungsgemäßen Magnetfeldsensors lediglich durch das zu erfassende Magnetfeld bestimmt wird, dessen Richtung beliebig sein kann. Die Figuren sind nicht maßstabsgetreu und geben insbesondere die Abmessungen und Abstände der den Magnetfeldsensor bildenden Teile der Deutlichkeit halber stark vergrößert wieder.

Die folgenden Beispiele zeigen alle eine Verwendung eines Magnetfeldsensors als fein auflösender Drehgeber; dies ist jedoch nicht einschränkend zu verstehen, da seine Verwendung, insbesondere auch bei fein auflösenden Lineargebern und in all den Fällen möglich und vorteilhaft ist, in denen ein oder mehrere magnetosensitive Elemente so angeordnet werden müssen, dass sich ihre jeweilige aktive Fläche parallel zu Richtung eines zu erfassenden Magnetfelds erstreckt und somit eine Feldumlenkung erforderlich ist.

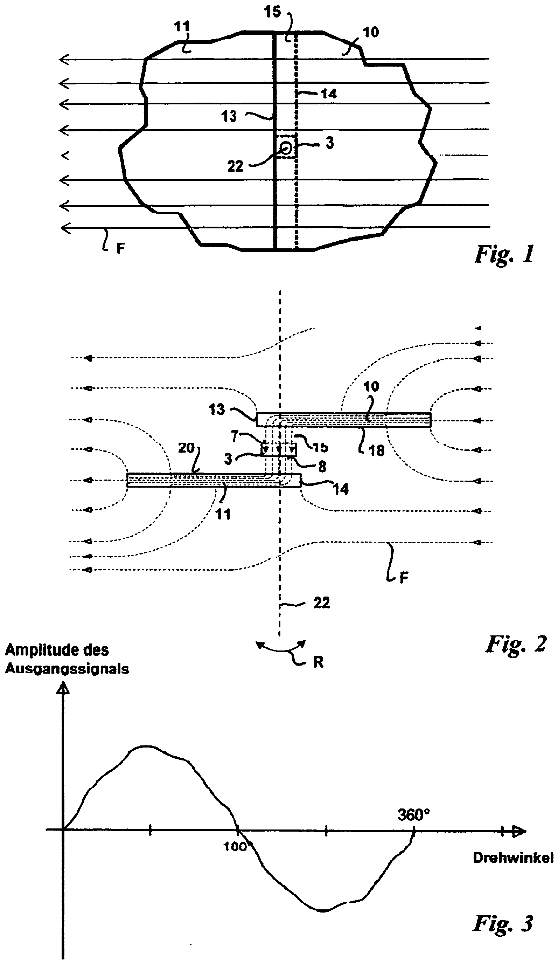

Die Fig. 1 und 2 zeigen einen Magnetfeldsensor 1, der ein von einem Hallelement gebildetes magnetosensitives Element 3 besitzt, das auf einem Chip realisiert ist, der zwei ebene, zueinander parallele Hauptflächen 7, 8 aufweist, von denen die eine praktisch mit der aktiven Fläche des Hallelements zusammenfällt. Die durch Pfeile angedeuteten Magnetfeldlinien F verlaufen generell parallel zu diesen Hauptflächen 7 und 8, sodass sie das magnetosensitive Element 3 ohne das Vorhandensein von Umlenkkörpern 10, 11 nicht erfassen könnte.
Die beiden Umlenkkörper 10, 11 sind hier als flache Plättchen dargestellt, die in der Draufsicht der Fig. 1 jeweils eine gerade Kante 13 bzw. 14 besitzen, ansonsten aber unregelmäßig geformt sind. Sie sind bezüglich des magnetosensitiven Elements 3 fest derart angeordnet, dass sich ihre Parallelprojektionen auf eine zu den Hauptflächen 7, 8 parallele Ebene in einem Überlappungsbereich 15 überdecken, der die Form eines länglichen Streifens besitzt, dessen lange, durch die Kanten 13, 14 definierten Ränder zueinander parallel verlaufen, während seine kurzen, in Fig. 1 oben bzw. unten liegenden Kanten unregelmäßig geformt sind. Die unten liegende, ebene Grundfläche 18 des oberen Umlenkkörpers 10 befindet sich oberhalb der aktiven Fläche des magnetosensitiven Elementes 3, während sich die oben liegende, ebene Grundfläche 20 des unteren Umlenkkörpers 11 unterhalb der aktiven Fläche des magnetosensitiven Elementes 3 befindet. Der Abstand zwischen den beiden Grundflächen 18, 20 ist im Idealfall gleich der Höhe des das magnetosensitive Element 3 umfassenden Chips, sodass sie auf dessen Hauptflächen 7, 8 aufliegen.

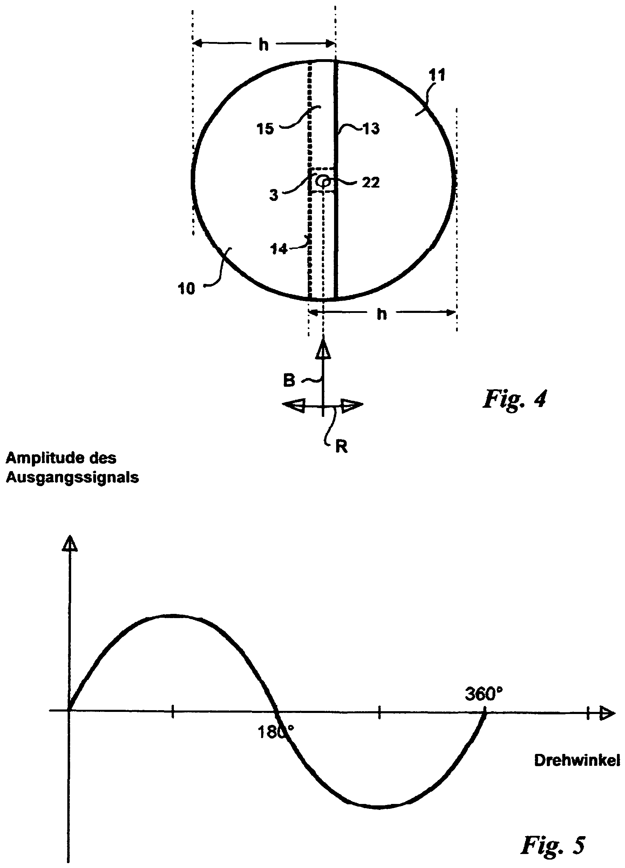

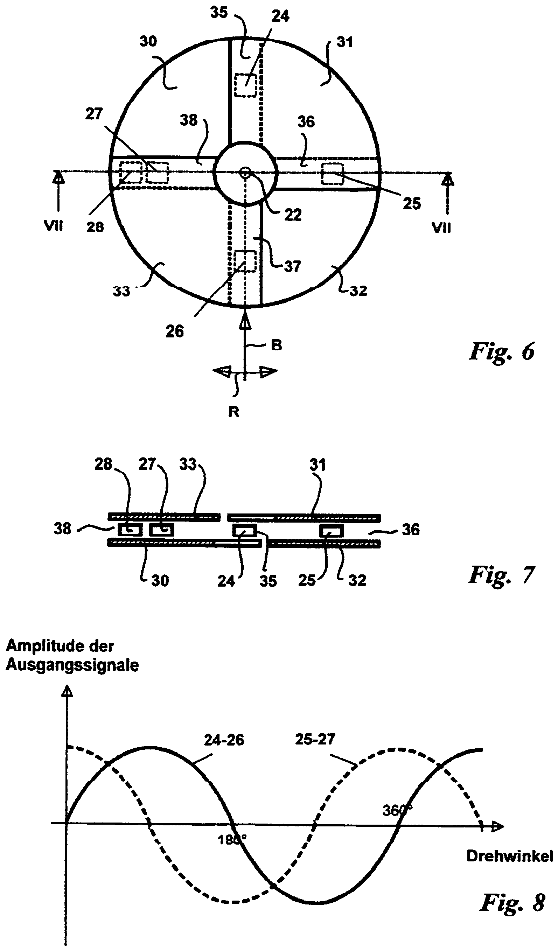

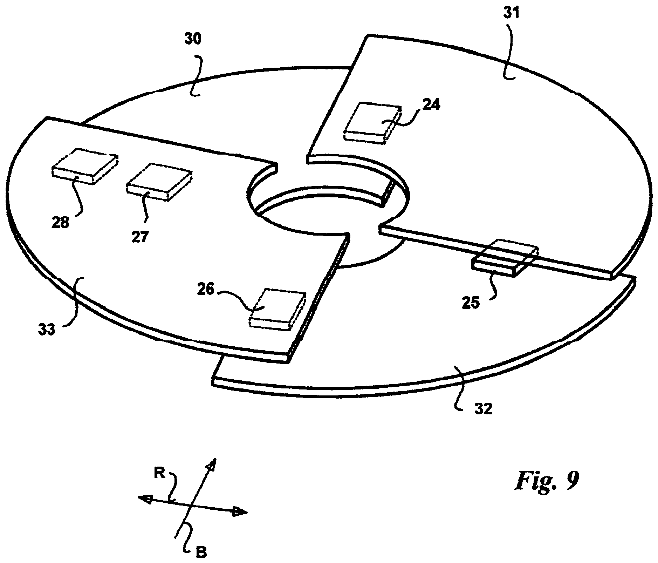

Die Drehachse 22, um die das durch den Magnetfeldsensor zu erfassende Magnetfeld bei einer Verwendung in einem fein auflösenden Drehgeber in Richtung des Doppelpfeils R rotiert, verläuft senkrecht zu den Hauptflächen 7, 8 durch das Zentrum des magnetosensitiven Elements 3.
Wie in Fig. 2 gezeigt, treten bei der in den Fig. 1 und 2 dargestellten Winkelstellung der Magnetfeldlinien F bezüglich des Magnetfeldsensors Magnetfeldlinien von rechts her in den oberen Umlenkkörper 10 ein und verlaufen in diesem so weit nach links, bis sie vor dem Erreichen seiner linken Kante 13 dem Weg des geringsten magnetischen Widerstandes folgend nach unten austreten, die aktive Fläche des von einer Hallsonde gebildeten magnetosensitiven Elements 3 senkrecht durchsetzen, dann in den unteren Umlenkkörper 11 eintreten, in dem sie weiter nach links verlaufen, um dann aus ihm nach links auszutreten. Man sieht, dass das magnetosensitive Element 3 bei dieser Winkelstellung des zu erfassenden Magnetfeldes in einem äußerst homogenen Feldbereich liegt und dass seine aktive Fläche von den Feldlinien senkrecht durchsetzt wird, sodass in dieser Winkelstellung die Amplitude des Ausgangssignals des magnetosensitiven Elements 3 ein Maximum aufweist. Es sei darauf hingewiesen, dass der Feldlinienverlauf der Fig. 2 zur Betonung der Symmetrie der Anordnung stark schematisiert wurde.
Dreht man das Magnetfeld gegenüber der in den Fig. 1 und 2 gezeigten Stellung um 90°, so liefert das magnetosensitive Element 3 ein Ausgangssignal mit der Amplitude Null, weil die Magnetfeldlinien F je nach der Richtung in der die 90°-Drehung erfolgt ist, in die in Fig. 1 oben oder unten liegenden Stirnkanten der Umlenkkörper 10, 11 ein- und an deren gegenüberliegenden Stirnkanten wieder austreten ohne von einem Umlenkkörper in den anderen überzuwechseln. Somit wird der Chip, der das magnetosensitive Element 3 umfasst, senkrecht zu seinen Hauptflächen 7, 8 von keinen Magnetfeldlinien durchsetzt. Gleiches gilt für die aktive Fläche des magnetosensitiven Elementes 3.
Nach einer weiteren 90°-Drehung des Magnetfeldes bezüglich des Magnetfeldsensors treten die Magnetfeldlinien entgegen dem in Fig. 2 gezeigten Verlauf von links her zunächst in den unteren Umlenkkörper 11 ein, um vor dem Erreichen seiner rechten Kante 14 senkrecht nach oben zum Umlenkkörper 10 hin auszutreten und dabei das magnetosensitive Element 3 von unten nach oben zu durchsetzen, sodass dessen Ausgangssignal nunmehr einen negativen "Maximalwert" aufweist, um dann bei Fortsetzung der Drehung wieder dem Wert Null zuzustreben.
Es ergibt sich ein periodischer Signalverlauf, wie er, bezüglich der obigen Schilderung um -90° verschoben, in Fig. 3 gezeigt ist. Die Abweichung dieser Signalkurve von einem ideal sinusförmigen Verlauf ist umso stärker ausgeprägt, je unregelmäßiger die Umlenkkörper 10, 11 geformt sind.
Eine fast perfekte Annäherung an die in Fig. 5 wiedergegebene ideale Sinusform lässt sich jedoch mit dem Magnetfeldsensor aus Fig. 4 erzielen, der sich von dem aus Fig. 1 nur dadurch unterscheidet, dass die beiden Umlenkkörper 10, 11 in der Draufsicht die Form von Kreisabschnitten besitzen, deren Abschnittshöhen h jeweils etwas größer als der Kreisradius sind, um den Überlappungsbereich 15 zu bilden. Der Pfeil B in Fig. 4 zeigt die Richtung des zu erfassenden Magnetfeldes in der Winkelstellung, in der die Amplitude des Ausgangssignal des magnetosensitiven Elementes 3 gleich Null ist, und der Pfeil R deutet an, dass eine Drehung des Magnetfeldes um eine senkrecht zur Zeichenebene der Fig. 4 durch die Mitte der aktiven Fläche des magnetosensitiven Elementes 3 verlaufende Drehachse erfolgen soll, wobei dann das Ausgangssignal des magnetosensitiven Elementes 3 den in Fig. 5 gezeigten Verlauf nimmt.
Die Unterdrückung eines äußeren magnetischen Stör-Gleichfeldes ist mit den bisher beschriebenen Magnetfeldsensoren allerdings nicht möglich, was bedeutet, dass sie entsprechend abgeschirmt werden müssen. Zur Vermeidung einer solchen Abschirmung, können zwei magnetosensitive Elemente so angeordnet werden, dass sie von dem zu erfassenden Magnetfeld mit gleicher Stärke aber in entgegengesetzter Richtung, von einem äußeren Störfeld aber in gleicher Richtung durchsetzt werden. Durch Subtraktion ihrer beiden Ausgangssignale erhält man dann eine Verdoppelung der Nutzamplitude und eine Eliminierung des Störanteils, der senkrecht zu dem zu erfassenden Magnetfeld liegt.
Um einen Magnetfeldsensor in einem Drehgeber als Feinauflösungseinheit verwenden zu können, werden, wie dies aus dem Stand der Technik bekannt ist, zwei gegeneinander phasenverschobene periodische Signale benötigt, um die in jedem dieser Signale enthaltene Mehrdeutigkeit eliminieren zu können.
Um zwei gegeneinander phasenversetzte, periodische Signale ohne senkrechten Störanteil durch ein äußeres Gleichfeld zu erhalten, werden vier solche paarweise gegeneinander geschaltete, beispielsweise von Hallelementen gebildete magnetosensitive Elemente 24, 25, 26, 27 verwendet, wie dies bei dem in den Fig. 6 bis 9 gezeigten Magnetfeldsensor der Fall ist. Die vier magnetosensitiven Elemente 24, 25, 26, 27 sind mit gleichen Winkelabständen von 90° auf einem zur Drehachse 22 konzentrischen Kreis angeordnet, wobei jeweils zwei einander diametral gegenüberliegende magnetosensitive Elemente 24 und 26 bzw. 25 und 27 ein bezüglich ihrer Ausgangssignale gegeneinander geschaltetes Paar bilden. Ein fünftes magnetosensitives Element 28 dient bei einem die Anzahl der durchlaufenen Umdrehungen zählenden absoluten Drehgeber der Drehrichtungserkennung.

Als Umlenkkörper 30, 31, 32, 33 sind vier gleiche Kreisringabschnittsscheiben vorgesehen, die sich jeweils über etwas mehr als 90° erstrecken und konzentrisch zur Drehachse 22 so angeordnet sind, dass sie vier Überlappungsbereiche 35, 36, 37, 38 bilden, in jedem von denen eines der magnetosensitiven Elemente 24, 25, 26, 27 angeordnet ist. Die Kanten der Überlappungsbereiche 35, 36, 37, 38 verlaufen nicht auf Kreisradien sondern jeweils zueinander parallel.

Die jeweiligen aktiven Flächen der vier magnetosensitiven Elemente 24, 25, 26, 27 liegen in einer gemeinsamen Ebene, oberhalb derer die beiden einander diametral gegenüberliegenden Umlenkkörper 30, 32 so angeordnet sind, dass ihre flachen Unterseiten parallel zu den aktiven Flächen verlaufen, während sich die beiden Umlenkkörper 31, 33 unterhalb der aktiven Flächen mit zu dieser parallelen, flachen Oberseiten befinden. Der Innendurchmesser der Kreisringabschnittsscheiben ist mindestens so groß, dass ein magnetischer Kurzschluss vorbei an den magnetosensitiven Elementen 24, 25, 26, 27 vermieden wird.

Bei der in Fig. 6 gezeigten Winkelstellung der Magnetfeldlinien B bezüglich des Magnetfeldsensors liefert das gegeneinander geschaltete Paar der magnetosensitiven Elemente 24, 26 ein Signal mit der Amplitude Null, während das Signal, das von dem von den beiden anderen magnetosensitiven Elementen 25, 26 gebildeten Paar abgegeben wird, eine maximale Amplitude aufweist.

Für das magnetosensitive Element 24, das im Überlappungsbereich 35 der beiden Umlenkkörper 30, 31 liegt, in welche die Magnetfeldlinien bei der in Fig. 6 gezeigten Winkelstellung von unten her in gleichem Ausmaß eintreten, sind insoweit völlig symmetrische Feldbedingungen vorhanden, als oberhalb und unterhalb des magnetosensitiven Elements 24 die gleiche Feldstärke herrscht. Es findet also kein Feldlinienübertritt statt, und die durch das zu erfassende Magnetfeld erzeugte Amplitude des Ausgangssignals des magnetosensitiven Elements 24 ist gleich Null. Letzteres gilt auch für das nur in Fig. 6 sichtbare, magnetosensitive Element 26, sodass die Differenz der beiden Nutzfeld-Signale ebenfalls Null ergibt.

Auch bei Vorhandensein eines senkrechten, äußeren magnetischen Störfeldes ist die Differenz dieser beiden Signale gleich Null, da ein solches die beiden magnetosensitiven Elemente 24, 26 in der gleichen Richtung durchsetzendes Gleichfeld zu gleich großen Ausgangssignalamplituden der magnetosensitiven Elemente 24, 26 führt.

Demgegenüber müssen die Feldlinien, die in die Umlenkkörper 32 und 33 eingetreten sind, vor deren die Überlappungsbereiche 36 und 38 begrenzenden Stirnenden austreten und dem Weg des geringsten magnetischen Widerstandes folgen, d.h. sie treten von dem unten liegenden Umlenkkörper 32 durch das magnetosensitive Element 25 hindurch in den oberen Umlenkkörper 31 bzw. auf der diametral gegenüberliegenden Seite von dem oben liegenden Umlenkkörper 33 durch das magnetosensitive Element 27 hindurch in den unteren Umlenkkörper 30 über. Da somit die übertretenden Magnetfeldlinien die magnetosensitiven Elemente 25, 27 in entgegengesetzten Richtungen durchdringen, geben diese Signale mit gleich großer Amplitude aber entgegengesetztem Vorzeichen ab, sodass durch die Differenzbildung hinsichtlich des Nutzfeldes eine Amplitudenverdoppelung stattfindet, während die Anteile von senkrechten Störfeldern herausfallen, welche die magnetosensitiven Elemente 25, 27 in gleicher Richtung durchsetzen.
Wegen der hohen Symmetrie der Anordnung und der Ausbildung der Umlenkkörper 30 bis 33 sowie der Positionierung der magnetosensitiven Elemente 24 bis 27 ergibt sich bei dieser Variante eines erfindungsgemäßen Magnetfeldsensors nicht nur eine sehr gute Störfeldunterdrückung sondern man erhält, wie in Fig. 8 gezeigt, auch zwei um 90° phasenverschobene Ausgangssignalkurven, die einen nahezu idealen Sinus- bzw. Kosinusverlauf zeigen, sodass dieser Magnetfeldsensor für eine Verwendung als Feinauflösungs-Sensoreinheit in einem Drehgeber bestens geeignet ist.

Bei den bisher erläuterten Beispielen weisen die Umlenkkörper an dem oder den Überlappungsbereichen durchgehend geradlinige Kanten auf. Wenn eine zusätzliche Feldverstärkung erhalten werden soll, werden die Überlappungsbereiche auf die Breite des oder der magnetosensitiven Elemente reduziert, wodurch vorspringende Zähne an den ansonsten zurückgesetzten geradlinigen Kanten entstehen.

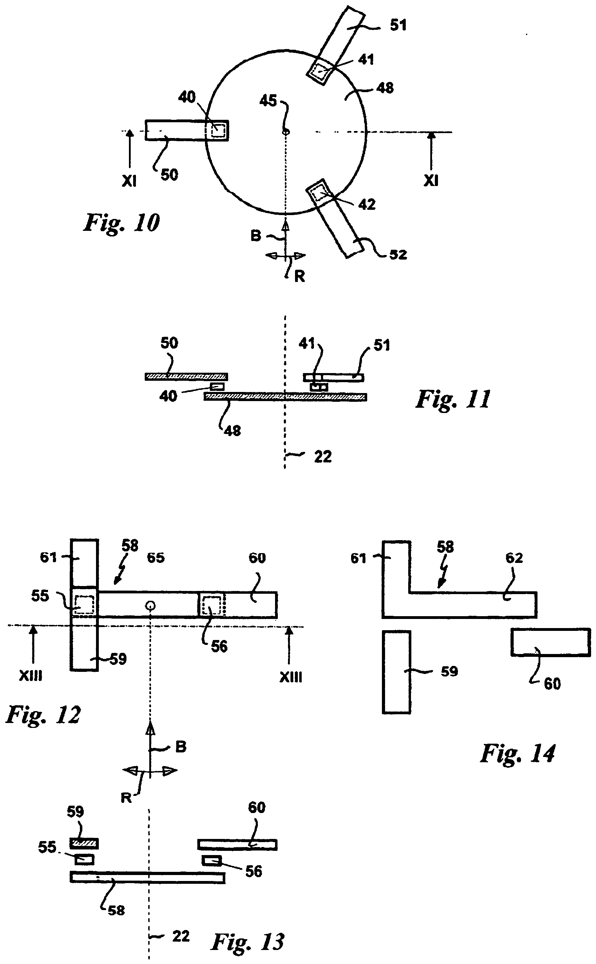

Der in Fig. 10 in Draufsicht gezeigte Magnetfeldsensor umfasst drei von Hallelementen gebildete magnetosensitive Elemente 40, 41 und 42, die auf einem (in der Fig. 10 nicht gesondert markierten) Kreis angeordnet sind, der einen Mittelpunkt 45 besitzt, durch den senkrecht zur Zeichenebene der Fig. 10 die Drehachse 22 der Erregereinheit eines fein auflösenden Drehgebers verlaufen kann, so dass sich bei deren Drehung gemäß dem Doppelpfeil R die durch den Pfeil B gekennzeichnete Richtung eines Magnetfeldes verändern kann.
Die magnetosensitiven Elemente 40, 41 und 42. besitzen voneinander gleiche Winkelabstände von jeweils 120°.
Wie insbesondere Fig. 11 zeigt, ist unterhalb der magnetosensitiven Elemente 40, 41 und 42 ein kreisscheibenförmiger ferromagnetischer Umlenkkörper 48 parallel zu der von den aktiven Flächen der magnetosensitiven Elemente 40, 41 und 42 aufgespannten Ebene konzentrisch zum Mittelpunkt 45 angeordnet, dessen Durchmesser zumindest so groß gewählt ist, dass die aktiven Flächen der magnetosensitiven Elemente 40, 41 und 42 innerhalb des von ihm überdeckten Bereiches liegen.

Auf der gegenüberliegenden Seite der durch die aktiven Flächen der magnetosensitiven Elemente 40, 41 und 42 aufgespannten Ebene sind drei weitere ferromagnetische Umlenkkörper 50, 51, 52 in Form von länglichen, rechteckigen Plättchen vorgesehen, die mit ihren Längsachsen radial ausgerichtet und so positioniert sind, dass ihr jeweils zum Mittelpunkt 45 hin weisender Endbereich jeweils eines der magnetosensitiven Elemente 40, 41 und 42 vollständig überdeckt und damit überlappend über den kreisscheibenförmigen Umlenkkörper 48 ragt.

Die Funktion dieses Magnetfeldsensors ist analog zu der Arbeitsweise der vorausgehend beschriebenen Sensoren, d.h. immer dann, wenn die Richtung des sich drehenden Magnetfeldes mit der Längsachse eines der oberen ferromagnetischen Umlenkkörper 50, 51 oder 52 zusammenfällt, treten auf seinen äußeren, d.h. vom Mittelpunkt 45 entfernt liegenden Endbereich treffende Magnetfeldlinien in diesen ferromagnetischen Umlenkkörper 50, 51 oder 52 ein, um aus ihm im gegenüberliegenden Endbereich, d.h. im betreffenden Überlappungsbereich mit dem unteren ferromagnetischen Umlenkkörper 48 nach unten aus- und zum unteren ferromagnetischen Umlenkkörper 48 überzutreten, wobei sie das betreffende magnetosensitive Element praktisch senkrecht durchsetzen, sodass dieses eine Ausgangssignal mit maximaler Amplitude abgibt.

Verläuft dagegen die Richtung des Magnetfeldes senkrecht zur Längsachse eines der oberen ferromagnetischen Umlenkkörper, wie dies in Fig. 10 für den linken ferromagnetischen Umlenkkörper 50 der Fall ist, so treten zwar Feldlinien in über seine ihnen zugewandte Längskante in ihn ein und an der gegenüberliegenden Längskante wieder aus, ohne dass jedoch ein Übertritt zum unteren ferromagnetischen Umlenkkörper 48 erfolgt, der von magnetischen Feldlinien in der gleichen Richtung durchsetzt wird. Das zugehörige magnetosensitive Element 40 wird somit von keinen magnetischen Feldlinien durchsetzt und gibt in dieser Stellung ein minimales Ausgangssignal ab, dessen Amplitude dann, wenn keine äußeren magnetischen Stör-Gleichfelder vorhanden sind, den Wert Null annimmt.

Ähnlich wie in Fig. 8 gezeigt, liefert der Magnetfeldsensor aus den Fig. 10 und 11 drei um 120° phasenverschobene Ausgangssignalkurven, die wiederum einen nahezu idealen Sinusverlauf zeigen.

Bei einer nicht dargestellten Variante können bei einem dem Magnetfeldsensor aus den Fig. 10 und 11 ähnlichen Sensor vier magnetosensitive Elemente mit gegenseitigen Winkelabständen von 90° angeordnet werden, jedem von denen ein ferromagnetischer Umlenkkörper in Form eines länglichen, rechteckigen Plättchens in der gleichen Weise zugeordnet ist, wie dies die Fig. 10 und 11 zeigen. Wie bei dem Magnetfeldsensor aus den Fig. 6 und 7 können die Ausgangssignale von den einander diametral gegenüberliegenden magnetosensitiven Elementen gegeneinander geschaltet werden, so dass bei Vorhandensein eines äußeren senkrechten magnetischen Störfeldes dessen Beitrag zur Signalamplitude durch Differenzbildung gleich Null ist, da ein solches Gleichfeld zu gleich großen Ausgangssignalamplituden der magnetosensitiven Elemente führt. Beide Varianten sind absolut symmetrisch und liefern daher ideale Sinussignale.

Besonders vorteilhaft an diesen beiden Varianten ist, dass dann, wenn die magnetosensitiven Elemente im unmittelbaren Oberflächenbereich einer der Hauptflächen eines IC-Chips ausgebildet sind, die sich radial erstreckenden Umlenkkörper mit hoher Genauigkeit direkt auf dieser Hauptfläche positioniert werden können. Zu Erzielung der geforderten, möglichst vollständigen Überlappung der aktiven Fläche eines jeden magnetosensitiven Elementes müssen daher die betreffenden Endbereiche dieser Umlenkkörper nicht überdimensioniert werden, sodass sie nur den kleinstmöglichen Teil der Chipoberfläche bedecken. Der auf die gegenüberliegende Hauptfläche des Chips aufgebrachte kreisscheibenförmige Umlenkkörper, der wegen der Chipdicke einen größeren Abstand von den aktiven Flächen aufweist, ist in dieser Hinsicht unkritisch und kann ohne Weiteres etwas größer als unbedingt erforderlich ausgebildet werden, weil er nur das Trägersilizium bedeckt, in dem auf dieser Seite keine weiteren Schaltungsteile und/oder Leiterbahnen vorhanden sind.
Der in den Fig. 12 und 13 gezeigte Magnetfeldsensor umfasst zwei von Hallelementen gebildete magnetosensitive Elemente 55, 56 und drei ferromagnetische Umlenkkörper 58, 59, 60, von denen der eine, unterhalb der Ebenen der aktiven Flächen der Hallelemente angeordnete Umlenkkörper 58 L-förmig ausgebildet ist, d.h. zwei zueinander senkrecht stehende, jeweils rechtecksförmige und gleich breite Schenkel 61, 62 umfasst, die einen in etwa quadratischen Verbindungsbereich besitzen, oberhalb dessen das eine magnetosensitive Element 55 angeordnet ist, während das andere sich oberhalb des Endbereiches des längeren der Schenkels 62 des Umlenkkörpers 58 befindet.
Oberhalb der beiden magnetosensitiven Element 55, 56 befinden sich die beiden plättchenförmigen ferromagnetischen Umlenkkörper 59 und 60, die jeweils eine rechteckige Grundrissform mit einer Breite besitzen, die gleich der Breite der beiden Schenkel 61, 62 des L-förmigen Umlenkkörpers 58 ist.
Fig. 12 ist eine Draufsicht auf diesen Magnetfeldsensor im zusammengebauten, funktionsfähigen Zustand, in dem die Längsachse des oberen Umlenkkörpers 59 mit der Längsachse des Schenkels 61 des L-förmigen Umlenkkörpers 58 fluchtet und der in etwa quadratische Verbindungsbereich der Schenkel 61, 62 vom Endbereich des oberen Umlenkkörpers 59 überdeckt wird, um den Überlappungsbereich für das eine magnetosensitive Element 55 zu bilden. Die Längsachse des anderen oberen Umlenkkörpers 60 fluchtet mit der des längeren Schenkels 62 des L-förmigen Umlenkkörpers 58 und die Endbereiche des längeren Schenkels 62 und des oberen Umlenkkörpers 60 liegen übereinander um den Überlappungsbereich zu bilden, in dem sich das andere magnetosensitive Element 56 befindet.
Nimmt man an, dass sich die Richtung eines zur Zeichenebene der Fig. 12 parallelen, homogenen Magnetfeldes B um eine diese Zeichenebene im Mittelpunkt der Verbindungslinie der beiden magnetosensitiven Elemente 55 und 56 durchstoßende Drehachse 22 dreht, wie durch den Doppelpfeil R angedeutet, so wird bei der in Fig. 12 gezeigten Stellung das magnetosensitive Element 55 von den in den oberen Umlenkkörper 59 ein- und von diesem in den kürzeren Schenkel 61 des unteren Umlenkkörpers 58 übertretenden Magnetfeldlinien senkrecht durchsetzt und liefert ein Ausgangssignal mit maximaler Amplitude, während zwischen dem oberen Umlenkkörper 60 und dem längeren Schenkel 62 des unteren Umlenkkörpers 58 kein Magnetfeldübertritt erfolgt, das magnetosensitive Element 56 also ein Ausgangssignal mit minimaler Amplitude liefert, die ohne externes Störfeld gleich Null ist.
Bei einer demgegenüber um 90° gedrehten Stellung des Magnetfeldes B treten im Überlappungsbereich zwischen dem Umlenkkörper 59 und dem unteren Umlenkkörper 58, in dem sich das magnetosensitive Element 55 befindet, keine Magnetfeldlinien über (Ausgangssignal des magnetosensitiven Elements 55 mit Amplitude Null), sehr wohl aber im Überlappungsbereich zwischen dem oberen Umlenkkörper 60 und dem längeren Schenkel 62 des unteren Umlenkkörpers 58, sodass das dort befindliche magnetosensitive Element 56 ein Ausgangssignal mit maximaler Amplitude liefert.

Man erhält also auch bei dieser Variante eines Magnetfeldsensors zwei gegeneinander um 90° versetzte, periodische Ausgangssignale, die ebenso wie die in Fig. 8 gezeigten Signale wegen der hohen Symmetrie der Anordnung der drei ferromagnetische Umlenkkörper 58, 59, 60 einen nahezu idealen Sinus- bzw. Kosinusverlauf zeigen.
In der Draufsicht der Fig. 14 sind die oberen Umlenkkörper 59, 60 soweit gegen den unteren Umlenkkörper 58 verschoben dargestellt, dass keinerlei Überlappungen vorhanden sind. Es handelt sich dabei nicht um eine funktionsfähige Anordnung. Diese Darstellung dient lediglich dazu, die Grundrissformen der drei Umlenkkörper 58, 59, 60 klar zu zeigen. Diese Variante wird man vor allem bei Linear- und Holwellengebern anwenden, um beiden magnetosensitiven Elementen die gleichen magnetischen Feldbereiche anbieten zu können. Das Problem senkrechter Störfelder ist hier allerdings nicht gelöst, kann aber auf andere Weise elegant beseitigt werden, z.B. durch ein zusätzliches magnetosensitives Element, das nur die senkrechte Feldkomponente misst.
Vorteilhafterweise sind die von Hallelementen gebildeten magnetosensitiven Elemente in einer einzigen integrierten Schaltung untergebracht, die einen kompletten Singleturn IC darstellt, d.h. dessen gesamte Ansteuer- und Auswerteelektronik umfasst.

Die in den Fig. 6 bis 11 dargestellten Beispiele eines Magnetfeldsensors stellen Lösungen dar, bei denen Störfelder, die senkrecht zu dem zu erfassenden Magnetfeld stehen, auf einfache Weise durch Subtraktion von Signalen der vorzugsweise von Hallelementen gebildeten magnetosensitiven Elemente eliminiert werden.
Hierdurch wird zwar das Messergebnis verbessert, die Störfeldproblematik aber nicht vollständig gelöst, da die Störungen als Vektoren im allgemeinsten Fall jede beliebige Lage im Raum einnehmen können.
Es gibt jedoch die Möglichkeit, Geber konstruktiv so zu gestalten, dass die Störfeldvektoren in zur Bewegungsrichtung senkrechten Ebenen verlaufen. In diesem Fall kann deren Eliminierung erreicht werden.

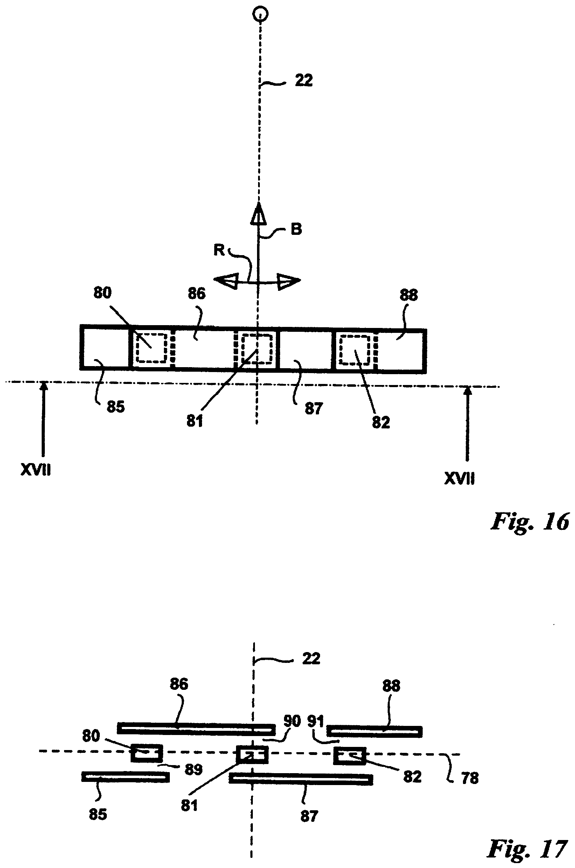

In Fig. 16 sind in schematischer Weise die wesentlichsten Teile eines als absoluter, fein auflösender Segmentzähler arbeitenden Hohlwellen-Drehgebers 65 dargestellt, wie er in ähnlicher Form auch in der DE 10 2009 034 744 A1 beschrieben ist.
Zu diesen wesentlichen Bestandteilen gehören ein kreisringförmiger Magnetträger 66 aus einem nicht ferromagnetischen Material, in das eine Vielzahl von quaderförmigen Permanentmagneten 68, 69, 70 eingebettet ist, von denen in Fig. 16 der Einfachheit halber nur drei wiedergegeben sind, ein Magnetfeldsensor 72 zur Erzeugung der Feinauflösungssignale des Drehgebers und ein Wiegandelement 74 zur Erzeugung der Magnetsegment-Zählsignale, dessen Achse parallel zu den Polachsen der Erregermagnete verläuft..
Vermittels seiner zentralen Bohrung 76 kann der Magnetträger 66 auf eine (nicht dargestellte) Welle konzentrisch aufgeschoben werden, deren um die Achse 22 erfolgende Drehbewegung durch den Hohlwellengeber 65 überwacht und messend verfolgt werden soll. Zu diesem Zweck ist der Magnetträger 66 mit der Welle drehfest verbunden.
Die Magnetisierungsrichtungen der Permanentmagnete 68, 69, 70 verlaufen bezüglich der Drehachse 22 radial und sind zwischen einander benachbarten Permanentmagneten 68, 69 bzw. 69, 70 usw. einander entgegengerichtet, sodass ungefähr in der Mitte der axialen Höhe der Umfangsfläche des Magnetträgers 66 in Drehrichtung alternierend magnetische N- und S-Pole aufeinander folgen, durch die eine virtuelle Ebene 78 aufgespannt wird. Die Achse des Wiegandelementes 74 ist radial zur Drehachse 22 so ausgerichtet, dass sie sich parallel zur Polachse des jeweils unter ihm hindurch laufenden Permanentmagneten 68, 69, 70 erstreckt.
Wie sich insbesondere auch den Fig. 16 und 17 entnehmen lässt, umfasst der Magnetfeldsensor 72 als magnetosensitive Elemente 80, 81, 82 drei vorzugsweise auf einem einzigen (nicht dargestellten) IC-Chip ausgebildete Hallelemente, die längs einer Tangente eines zur Drehachse 22 konzentrischen Kreisbogens mit so kleinen gegenseitigen Abständen angeordnet sind, dass sie praktisch auf diesem Kreisbogen selbst liegen. Die von den aktiven Flächen der magnetosensitiven Elemente 80, 81, 82 aufgespannten Ebenen verlaufen in etwa parallel zur virtuellen Ebene 78.
Weiterhin umfasst der der Magnetfeldsensor 72 vier Umlenkkörper 85, 86, 87, 88 aus ferromagnetischem Material von denen jeder die Form eines länglichen rechteckigen Plättchens besitzt, deren Längsachsen parallel zu der oben erwähnten Tangente verlaufen und miteinander fluchten. Zwei der Plättchen, nämlich die Umlenkkörper 86 und 88 liegen in einer zur virtuellen Ebene 78 parallelen Ebene oberhalb der magnetosensitiven Elemente 80, 81, 82, während sich die beiden andren Umlenkkörper 85, 87 in einer zur virtuellen Ebene 78 parallelen Ebene unterhalb der magnetosensitiven Elemente 80, 81, 82 befinden. In der Projektion auf die virtuellen Ebene 78 bilden die Umlenkkörper 85, 86 einen ersten Überlappungsbereich 89, der das magnetosensitive Element 80 vollständig überdeckt, während die Umlenkkörper86, 87 einen zweiten Überlappungsbereich 90 bilden, in dem das magnetosensitive Element 81 angeordnet ist und die Umlenkkörper 87, 88 einen dritten Überlappungsbereich 91 bilden, in dem sich das magnetosensitive Element 82 befindet.

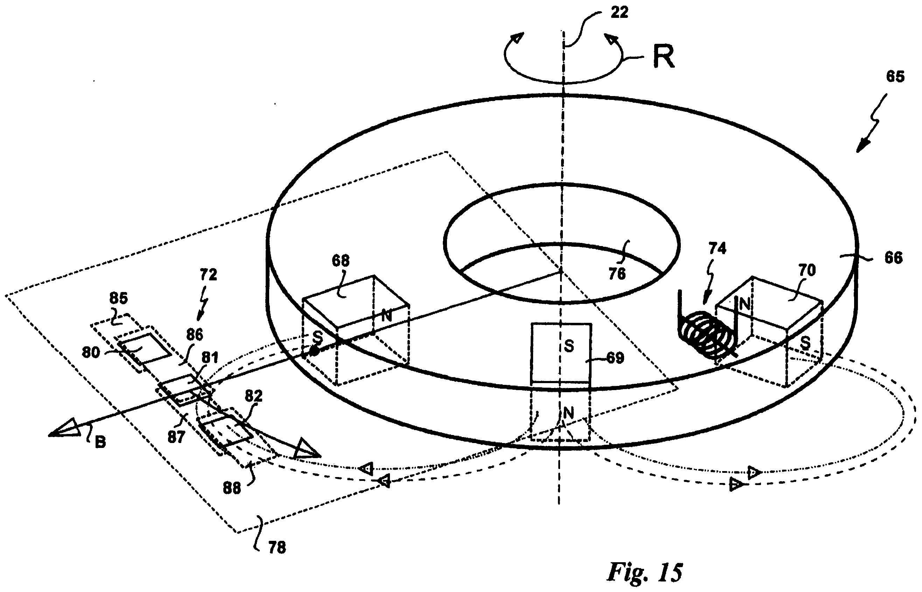

Es sei ausdrücklich darauf hingewiesen, dass sich in Fig. 15 ausgehend vom N-Pol des dem Permanentmagneten 68 im Uhrzeigersinn benachbarten (nicht dargestellten) Permanentmagneten die gleichen (nicht dargestellten) Magnetfeldlinien zum S-Pol des Permanentmagneten 68 erstrecken, wie dies für die Permanentmagneten 69 und 70 gezeigt ist.

Man sieht, dass nur die parallel zur virtuellen Ebene 78 verlaufenden, tangential gerichteten Komponenten der die Pole benachbarter Permanentmagnete verbindenden Felder durch die Umlenkkörper so umgelenkt werden, dass sie die aktiven Flächen der magnetosensitive Elemente 80, 81, 82 senkrecht durchsetzen. Die zwischen den Ausgangssignalen der magnetosensitive Elemente 80, 81 einerseits und 81, 82 andererseits gebildeten Differenzsignale sind sinusartig und verlaufen periodisch, sind jedoch elektrisch nicht um 90° sondern nur um etwa 30° gegeneinander phasenverschoben. Dies hat seine Ursache darin, dass wegen der nicht zuletzt durch Umweltparameter bedingten Forderung, alle magnetosensitiven Elemente 80, 81, 82 auf einem einzigen IC-Chip unterzubringen, die gegenseitigen Abstände der magnetosensitiven Elemente 80, 81, 82 nur einen Bruchteil der Polabstände einander benachbarter Permanentmagnete 68, 69, 70 betragen können. Trotzdem lassen sich insbesondere wegen der feldverstärkenden Umlenkkörperdeutlich voneinander unterscheidbare Signale erzielen, die für die Feinauflösung der zu überwachenden Drehbewegung bestens geeignet sind.

Wegen der üblichen Signal-Differenzbildung werden zur virtuellen Ebene 78 senkrechte Störfeldanteile eliminiert, während radial verlaufende Störfeldanteile durch die Umlenkkörper an den magnetosensitiven Elemente 80, 81, 82 kurzgeschlossen vorbeigeleitet werden, sodass ein einwandfreies Messergebnis garantiert ist.

Eines der von Hallelementen gebildeten magnetosensitiven Elemente arbeitet zeitweise auch im stromarmen Modus. Anstelle von drei können auch vier Hallelemente verwendet werden, von denen jeweils zwei paarweise gekoppelt sind, bezüglich der Drehachse jedoch auf verschiedenen Radien liegen.

## Patentansprüche

1. Magnetfeldsensor für einen Positionsgeber, mit wenigstens einem eine aktive Fläche aufweisendem magnetosensitiven Element, an dem im Betrieb ein elektrisches Signal abgreifbar ist, das sich in Abhängigkeit von der Feldstärke der Komponente eines sich aufgrund der Bewegung eines zu überwachenden Körpers bewegenden Magnetfeldes ändert, welche die aktive Fläche senkrecht durchsetzt, und mit einer ferromagnetischen Magnetfeldumlenkeinrichtung, die bezüglich des wenigstens einen magnetosensitiven Elements ortsfest so angeordnet ist, dass sie Magnetfeldlinien, die sonst parallel zur aktiven Fläche verlaufen würden, so umlenkt, dass sie die aktive Fläche mit einer zu dieser senkrechten Komponente durchsetzen, wobei die Magnetfeldumlenkeinrichtung wenigstens zwei ferromagnetische Umlenkkörper (10, 11; 30, 31, 32, 33; 48, 50, 51, 52; 58, 59, 60) umfasst, die in zwei parallelen Ebenen mit ihren aufeinander zuweisenden ebenen Grundflächen so angeordnet sind, dass sie wenigstens einen Überlappungsbereich bilden, in dem sich das wenigstens eine magnetosensitive Element (3; 24, 25, 26, 27; 40, 41, 42; 55, 56) befindet, dessen aktive Fläche zu den Grundflächen der ferromagnetischen Umlenkkörper (10, 11; 30, 31, 32, 33; 48, 50, 51, 52; 58, 59, 60) parallel verläuft, sodass das magnetosensitive Element (3; 24, 25, 26, 27; 40, 41, 42; 55, 56) vom Magnetfeld senkrecht durchsetzt wird; wobei die wenigstens zwei ferromagnetischen Umlenkkörper (10, 11; 30, 31, 32, 33; 48, 50, 51, 52; 58, 59, 60) als flache Plättchen ausgebildet sind; und wobei der Magnetfeldsensor wenigstens vier magnetosensitive Elemente (24, 25, 26, 27) umfasst, die in gleichen Abständen von einem Mittelpunkt mit gegenseitigen Winkelabständen angeordnet sind und deren aktive Flächen in einer Ebene liegen, und wobei die Magnetfeldumlenkeinrichtung vier gleiche, die Form dünner Kreisringabschnittsscheiben aufweisende, ferromagnetische Umlenkkörper (30, 31, 32, 33) umfasst, die konzentrisch zu dem Mittelpunkt so angeordnet sind, dass jeweils zwei einander diametral gegenüberliegende ferromagnetische Umlenkkörper (30, 32) auf der einen Seite und zwei einander diametral gegenüberliegende ferromagnetische Umlenkkörper (31, 33) auf der anderen Seite der aktiven Flächen liegen, wobei sich die Umlenkkörper (30, 31, 32, 33) in den Bereichen ihrer radial verlaufenden Kanten überlappen, und wobei in jedem der vier so gebildeten Überlappungsbereiche (35, 36, 37, 38) mindestens eines der magnetosensitiven Elemente (24, 25, 26, 27) angeordnet ist.

2. Magnetfeldsensor für einen Positionsgeber, mit wenigstens einem eine aktive Fläche aufweisendem magnetosensitiven Element, an dem im Betrieb ein elektrisches Signal abgreifbar ist, das sich in Abhängigkeit von der Feldstärke der Komponente eines sich aufgrund der Bewegung eines zu überwachenden Körpers bewegenden Magnetfeldes ändert, welche die aktive Fläche senkrecht durchsetzt, und mit einer ferromagnetischen Magnetfeldumlenkeinrichtung, die bezüglich des wenigstens einen magnetosensitiven Elements ortsfest so angeordnet ist, dass sie Magnetfeldlinien, die sonst parallel zur aktiven Fläche verlaufen würden, so umlenkt, dass sie die aktive Fläche mit einer zu dieser senkrechten Komponente durchsetzen, wobei die Magnetfeldumlenkeinrichtung wenigstens zwei ferromagnetische Umlenkkörper (10, 11; 30, 31, 32, 33; 48, 50, 51, 52; 58, 59, 60) umfasst, die in zwei parallelen Ebenen mit ihren aufeinander zuweisenden ebenen Grundflächen so angeordnet sind, dass sie wenigstens einen Überlappungsbereich bilden, in dem sich das wenigstens eine magnetosensitive Element (3; 24, 25, 26, 27; 40, 41, 42; 55, 56) befindet, dessen aktive Fläche zu den Grundflächen der ferromagnetischen Umlenkkörper (10, 11; 30, 31, 32, 33; 48, 50, 51, 52; 58, 59, 60) parallel verläuft, sodass das magnetosensitive Element (3; 24, 25, 26, 27; 40, 41, 42; 55, 56) vom Magnetfeld senkrecht durchsetzt wird; wobei die wenigstens zwei ferromagnetischen Umlenkkörper (10, 11; 30, 31, 32, 33; 48, 50, 51, 52; 58, 59, 60) als flache Plättchen ausgebildet sind; wobei der Magnetfeldsensor vier magnetosensitive Elemente (40, 41, 42) umfasst, die in gleichen Abständen von einem Mittelpunkt (45) mit gegenseitigen Winkelabständen angeordnet sind und deren aktive Flächen in einer Ebene liegen, und wobei die Magnetfeldumlenkeinrichtung fünf ferromagnetische Umlenkkörper (48, 50, 51, 52) umfasst, von denen einer die Form eines kreisförmigen Plättchens aufweist, das konzentrisch zum Mittelpunkt auf der einen Seite der aktiven Flächen angeordnet ist, während die vier anderen ferromagnetischen Umlenkkörper (50, 51, 52) die Form länglicher rechteckiger Plättchen besitzen, die auf der anderen Seite der aktiven Flächen so angeordnet sind, dass sich ihre jeweiligen Längsachsen bezüglich des Mittelpunktes (45) radial erstrecken und ihr jeweils dem Mittelpunkt (45) zugewandter Endbereich das kreisförmige Plättchen überlappt, und wobei in den vier so gebildeten Überlappungsbereichen mindestens ein magnetosensitives Element (40, 41, 42) angeordnet ist.

3. Magnetfeldsensor nach einem der vorhergehenden Ansprüche, bei dem sich in wenigstens einem der Überlappungsbereiche ein weiteres magnetosensitives Element befindet.

4. Magnetfeldsensor nach einem der vorhergehenden Ansprüche, bei dem die ferromagnetischen Umlenkkörper (10, 11; 30, 31, 32, 33; 48, 50, 51, 52; 58, 59, 60) aus Ferrit oder Permalloy bestehen.

5. Magnetfeldsensor nach einem der vorhergehenden Ansprüche, bei dem das wenigstens eine magnetosensitive Element (3; 24, 25, 26, 27; 40, 41, 42; 55, 56) ein Hallelement ist.

6. Magnetfeldsensor nach einem der vorhergehenden Ansprüche, bei dem das wenigstens eine magnetosensitive Element (3; 24, 25, 26, 27; 40, 41, 42; 55, 56) und die wenigstens zwei Umlenkkörper (10, 11; 30, 31, 32, 33; 48, 50, 51, 52; 58, 59, 60) Bestandteile eines ICs sind.

7. Magnetfeldsensor nach Anspruch 6, bei dem wenigstens einer der Umlenkkörper (10, 11; 30, 31, 32, 33) auf der Oberseite und wenigstens einer der Umlenkkörper (10, 11; 30, 31, 32, 33) auf der Unterseite eines IC-Chips des magnetosensitiven Elements (3; 24, 25, 26, 27; 40, 41, 42; 55, 56) angebracht ist.

8. Magnetfeldsensor nach Anspruch 6, bei dem wenigstens einer der Umlenkkörper (10, 11; 30, 31, 32, 33; 48, 50, 51, 52; 58, 59, 60) auf der Oberseite eines IC-Chips des magnetosensitiven Elements (3; 24, 25, 26, 27; 40, 41, 42; 55, 56) und wenigstens einer der Umlenkkörper (10, 11; 30, 31, 32, 33; 48, 50, 51, 52; 58, 59, 60) auf einer Platine angebracht ist, die den IC-Chip des magnetosensitiven Elements (3; 24, 25, 26, 27; 40, 41, 42; 55, 56) trägt.

## Claims

1. Magnetic field sensor for a position encoder, with
at least one magneto-sensitive element which comprises an active surface, at which magneto-sensitive element, during operation, an electric signal is tappable which changes in dependency from the field strength of the component of a magnetic field which is moving due to the motion of a body to be monitored, which component perpendicularly permeates the active surface, and with
a ferromagnetic magnetic field deflection unit which is stationary arranged with respect to the at least one magneto-sensitive element, such that the magnetic field deflection unit deflects magnetic field lines which would otherwise run in parallel with respect to the active surface, in a manner that the magnetic field lines permeate the active surface with a component which is perpendicular with respect to the active surface,
wherein the magnetic field deflection unit contains at least two ferromagnetic deflection bodies (10, 11; 30, 31, 32, 33; 48, 50, 51, 52; 58, 59, 60) which are arranged in two parallel planes with their facing planar basic surfaces, such that they form at least one overlapping region in which the at least one magneto-sensitive element (3; 24, 25, 26, 27; 40, 41, 42; 55, 56) is located whose active surface runs in parallel with respect to the basic surfaces of the ferromagnetic deflection bodies (10, 11; 30, 31, 32, 33; 48, 50, 51, 52; 58, 59, 60), such that the magneto-sensitive element (3; 24, 25, 26, 27; 40, 41, 42; 55, 56) is perpendicularly permeated by the magnetic field;
wherein the at least two ferromagnetic deflection bodies (10, 11; 30, 31, 32, 33; 48, 50, 51, 52; 58, 59, 60) are formed as flat plates; and
wherein the magnetic field sensor contains at least four magneto-sensitive elements (24, 25, 26, 27) which are arranged in equal distances with respect to a center point with angular distances to each other and whose active surfaces are in a plane, and
wherein the magnetic field deflection unit contains four equal ferromagnetic deflection bodies (30, 31, 32, 33) which comprise the shape of thin circular ring section discs, which are arranged concentrically with respect to the center point, such that respectively two ferromagnetic deflection bodies (30, 32) which are diametrically opposing each other are on the one side, and two ferromagnetic deflection bodies (31, 33) which are diametrically opposing each other are on the other side of the active surfaces,
wherein the deflection bodies (30, 31, 32, 33) are overlapping in the regions of their radially running edges, and
wherein in each of the thereby formed overlapping regions (35, 36, 37, 38) at least one of the magneto-sensitive elements (24, 25, 26, 27) is arranged.

2. Magnetic field sensor for a position encoder, with
at least one magneto-sensitive element which comprises an active surface, at which magneto-sensitive element, during operation, an electric signal is tappable which changes in dependency from the field strength of the component of a magnetic field which is moving due to the motion of a body to be monitored, which magnetic field perpendicularly permeates the active surface, and
a ferromagnetic magnetic field deflection unit which is stationary arranged with respect to the at least one magneto-sensitive element, such that the magnetic field deflection unit deflects magnetic field lines which would otherwise run in parallel with respect to the active surface, in a manner that the magnetic field lines permeate the active surface with a component which is perpendicular with respect to the active surface,
wherein the magnetic field deflection unit contains at least two ferromagnetic deflection bodies (10, 11; 30, 31, 32, 33; 48, 50, 51, 52; 58, 59, 60) which are arranged into parallel planes with their facing planar basic surfaces, such that they form at least one overlapping region in which the at least one magneto-sensitive element (3; 24, 25, 26, 27; 40, 41, 42; 55, 56) is located whose active surface runs in parallel with respect to the basic surfaces of the ferromagnetic deflection bodies (10, 11; 30, 31, 32, 33; 48, 50, 51, 52; 58, 59, 60), such that the magneto-sensitive element (3; 24, 25, 26, 27; 40, 41, 42; 55, 56) is permeated by the magnetic field;
wherein the at least two ferromagnetic deflection bodies (10, 11; 30, 31, 32, 33; 48, 50, 51, 52; 58, 59, 60) are formed as flat plates;
wherein the magnetic field sensor contains four magneto-sensitive elements (40, 41, 42) which are arranged with equal distances with respect to a center point (45) with angular distances to each other and whose active surfaces are in a plane, and
wherein the magnetic field deflection unit contains five ferromagnetic deflection bodies (48, 50, 51, 52) of which one comprises the shape of a circular plate which is arranged concentrically with respect to the center point on the one side of the active surfaces, while the four other ferromagnetic deflection bodies (50, 51, 52) have the shape of elongated rectangular plates which are arranged on the other side of the active surfaces, such that their longitudinal axes extend radially with respect to the center point (45) and their end region which is respectively facing the center point (45) is overlapping the circular plate, and
wherein in the four thereby formed overlapping regions at least one magneto-sensitive element (40, 41, 42) is arranged.

3. Magnetic field sensor according to one of the preceding claims, at which in at least one of the overlapping regions a further magneto-sensitive element is located.

4. Magnetic field sensor according to one of the preceding claims, at which the ferromagnetic deflection bodies (10, 11; 30, 31, 32, 33; 48, 50, 51, 52; 58, 59, 60) consist of ferrite or permalloy.

5. Magnetic field sensor according to one of the preceding claims, at which the at least one magneto-sensitive element (3, 24, 25, 26, 27; 40, 41, 42; 55, 56) is a Hall element.

6. Magnetic field sensor according to one of the preceding claims, at which the at least one magneto-sensitive element (3; 24, 25, 26, 27; 40, 41, 42; 55, 56) and the at least two deflection bodies (10, 11; 30, 31, 32, 33; 48, 50, 51, 52; 58, 59, 60) are parts of an IC.

7. Magnetic field sensor according to claim 6, at which at least one of the deflection bodies (10, 11; 30, 31, 32, 33) is attached to the top side and at least one of the deflection bodies (10, 11; 30, 31, 32, 33) is attached to the bottom side of an IC-chip of the magneto-sensitive element (3; 24, 25, 26, 27; 40, 41, 42; 55, 56).

8. Magnetic field sensor according to claim 6, at which at least one of the deflection bodies (10, 11; 30, 31, 32, 33; 48, 50, 51, 52; 58, 59, 60) is attached to the top side of an IC-chip of the magneto-sensitive element (3; 24, 25, 26, 27; 40, 41, 42; 55, 56) and at least one of the deflection bodies (10, 11; 30, 31, 32, 33; 48, 50, 51, 52; 58, 59, 60) is attached to a circuit board which is carrying the IC-chip of the magneto-sensitive element (3; 24, 25, 26, 27; 40, 41, 42; 55, 56).

## Revendications

1. Capteur de champ magnétique pour un détecteur de position, avec au moins un élément sensible au champ magnétique présentant une surface active, sur lequel un signal électrique peut être prélevé au cours du fonctionnement, qui se modifie en fonction de l'intensité de champ de la composante d'un champ magnétique mobile en raison du mouvement d'un corps à surveiller, laquelle traverse perpendiculairement la surface active, et avec un dispositif ferromagnétique de déviation de champ magnétique qui est disposé de manière fixe par rapport à l'au moins un élément sensible au champ magnétique de sorte qu'il dévie des lignes de champ magnétique, qui sinon seraient parallèles à la surface active, de sorte qu'elles traversent la surface active avec une composante perpendiculaire à celle-ci, dans lequel le dispositif de déviation de champ magnétique comprend au moins deux corps de déviation ferromagnétiques (10, 11 ; 30, 31, 32, 33 ; 48, 50, 51, 52 ; 58, 59, 60) qui sont disposés dans deux plans parallèles avec leurs surfaces de base planes tournées l'une vers l'autre de sorte qu'ils forment au moins une zone de recouvrement partiel dans laquelle se trouve l'au moins un élément sensible au champ magnétique (3 ; 24, 25, 26, 27 ; 40, 41, 42 ; 55, 56) dont la surface active est parallèle aux surfaces de base des corps de déviation ferromagnétiques (10, 11 ; 30, 31, 32, 33 ; 48, 50, 51, 52 ; 58, 59, 60) de sorte que l'élément sensible au champ magnétique (3 ; 24, 25, 26, 27 ; 40, 41, 42 ; 55, 56) soit traversé perpendiculairement par le champ magnétique ; dans lequel les au moins deux corps de déviation ferromagnétiques (10, 11 ; 30, 31, 32, 33 ; 48, 50, 51, 52 ; 58, 59, 60) sont conçus en tant que pastilles planes ; dans lequel le capteur de champ magnétique comprend au moins quatre éléments sensibles au champ magnétique (24, 25, 26, 27) qui sont disposés à des écarts identiques d'un point central avec des écarts angulaires réciproques et dont les surfaces actives sont dans un plan, et dans lequel le dispositif de déviation de champ magnétique comprend quatre corps de déviation ferromagnétiques (30, 31, 32, 33) identiques présentant la forme de minces disques de section d'anneau circulaire, qui sont disposés concentriques au point central de sorte que deux corps de déviation ferromagnétiques (30, 32) diamétralement opposés soient situés sur une face de la surface active et deux corps de déviation ferromagnétiques (31, 33) diamétralement opposés sur l'autre face de la surface active, dans lequel les corps de déviation (30, 31, 32, 33) se recouvrent partiellement dans les zones de leurs bords radiaux, et dans lequel, dans chacune des quatre zones de recouvrement partiel (35, 36, 37, 38) ainsi formées est disposé au moins un des éléments sensibles au champ magnétique (24, 25, 26, 27).

2. Capteur de champ magnétique pour un détecteur de position, avec au moins un élément sensible au champ magnétique présentant une surface active, sur lequel un signal électrique peut être prélevé au cours du fonctionnement, qui se modifie en fonction de l'intensité de champ de la composante d'un champ magnétique mobile.en raison du mouvement d'un corps à surveiller, laquelle traverse perpendiculairement la surface active, et avec un dispositif ferromagnétique de déviation de champ magnétique qui est disposé de manière fixe par rapport à l'au moins un élément sensible au champ magnétique de sorte qu'il dévie des lignes de champ magnétique, qui sinon seraient parallèles à la surface active, de sorte qu'elles traversent la surface active avec une composante perpendiculaire à celle-ci, dans lequel le dispositif de déviation de champ magnétique comprend au moins deux corps de déviation ferromagnétiques (10, 11 ; 30, 31, 32, 33 ; 48, 50, 51, 52 ; 58, 59, 60) qui sont disposés dans deux plans parallèles avec leurs surfaces de base planes tournées l'une vers l'autre de sorte qu'ils forment au moins une zone de recouvrement partiel dans laquelle se trouve l'au moins un élément sensible au champ magnétique (3 ; 24, 25, 26, 27 ; 40, 41, 42 ; 55, 56) dont la surface active est parallèle aux surfaces de base des corps de déviation ferromagnétiques (10, 11 ; 30, 31, 32, 33 ; 48, 50, 51, 52 ; 58, 59, 60) de sorte que l'élément sensible au champ magnétique (3 ; 24, 25, 26, 27 ; 40, 41, 42 ; 55, 56) soit traversé perpendiculairement par le champ magnétique ; dans lequel les au moins deux corps de déviation ferromagnétiques (10, 11 ; 30, 31, 32, 33 ; 48, 50, 51, 52 ; 58, 59, 60) sont conçus en tant que pastilles planes ; dans lequel le capteur de champ magnétique comprend quatre éléments sensibles au champ magnétique (40, 41, 42) qui sont disposés à des écarts identiques d'un point central (45) avec des écarts angulaires réciproques et dont les surfaces actives sont dans un plan, et dans lequel le dispositif de déviation de champ magnétique comprend cinq corps de déviation ferromagnétiques (48, 50, 51, 52) parmi lesquels un présente la forme d'une pastille de forme circulaire qui est disposée concentrique au point central sur une face des surfaces actives tandis que les quatre autres corps de déviation ferromagnétiques (50, 51, 52) possèdent la forme de pastilles rectangulaires allongées qui sont disposées sur l'autre face des surfaces actives de sorte que leurs axes longitudinaux respectifs s'étendent radialement par rapport au point central (45) et que leur zone d'extrémité tournée respectivement vers le point central (45) recouvre partiellement la pastille de forme circulaire, et dans lequel au moins un élément sensible au champ magnétique (40, 41, 42) est disposé dans les quatre zones de recouvrement partiel ainsi formées.

3. Capteur de champ magnétique selon l'une quelconque des revendications précédentes, dans lequel un autre élément sensible au champ magnétique se trouve dans au moins une des zones de recouvrement partiel.

4. Capteur de champ magnétique selon l'une quelconque des revendications précédentes, dans lequel les corps de déviation ferromagnétiques (10, 11 ; 30, 31, 32, 33 ; 48, 50, 51, 52 ; 58, 59, 60) sont composés de ferrite ou de permalloy.

5. Capteur de champ magnétique selon l'une quelconque des revendications précédentes, dans lequel l'au moins un élément sensible au champ magnétique (3 ; 24, 25, 26, 27 ; 40, 41, 42 ; 55, 56) est un élément Hall.

6. Capteur de champ magnétique selon l'une quelconque des revendications précédentes, dans lequel l'au moins un élément sensible au champ magnétique (3 ; 24, 25, 26, 27 ; 40, 41, 42 ; 55, 56) et les au moins deux corps de déviation (10, 11 ; 30, 31, 32, 33 ; 48, 50, 51, 52 ; 58, 59, 60) sont des parties intégrantes d'un circuit intégré.

7. Capteur de champ magnétique selon la revendication 6, dans lequel au moins un des corps de déviation (10, 11 ; 30, 31, 32, 33) est placé sur la face supérieure et l'au moins un des corps de déviation (10, 11 ; 30, 31, 32, 33) sur la face inférieure d'une puce de circuits intégrés de l'élément sensible au champ magnétique (3 ; 24, 25, 26, 27 ; 40, 41, 42 ; 55, 56).

8. Capteur de champ magnétique selon la revendication 6, dans lequel au moins un des corps de déviation (10, 11 ; 30, 31, 32, 33 ; 48, 50, 51, 52 ; 58, 59, 60) est placé sur la face supérieure d'une puce de circuits intégrés de l'élément sensible au champ magnétique (3 ; 24, 25, 26, 27 ; 40, 41, 42 ; 55, 56) et au moins un des corps de déviation (10, 11 ; 30, 31, 32, 33 ; 48, 50, 51, 52 ; 58, 59, 60) sur une platine qui supporte la puce de circuits intégrés de l'élément sensible au champ magnétique (3 ; 24, 25, 26, 27 ; 40, 41, 42 ; 55, 56).
